# EUROPEAN PATENT APPLICATION

(11) **EP 2 608 036 A1**
(43) Date of publication of application: **26.06.2013**
(21) Application number: 11306746.6
(22) Date of filing: 22.12.2011
(51) Int. Cl.: G06F 11/10

(54) **Method and system for managing error detection and correction**

(71) Applicant: Thomson Licensing, 92130 Issy-les-Moulineaux (FR)
(72) Inventor: Gaedke, Klaus, 30659 Hannover (DE); Schuetze, Herbert, 29227 Celle (DE)
(74) Representative: Schiller, Harald

(57) **Abstract**

A method (400) for storing data in a non-volatile random access memory device connected to a cache memory of a digital system organized in cache lines. The method comprises subdividing (404) data to be stored in the random access memory device into data blocks of a selected data block size. The method further comprises determining (408), from the data blocks, associated error protection data, and storing the data blocks together with the associated error protection data in the random access memory device, and **characterized** (406) **in that** the data block size is selected to be equal to the size of the cache lines.

## Description

The present invention relates to the field of data storage systems. In particular, exemplary embodiments of the present invention relate to a method and system for managing error detection and correction during access of data stored on a non-volatile solid state storage medium.

The process of reading data stored on a storage medium such as a solid state memory device, generally entails deciphering which data bits comprise real data and which of the data bits form erroneous or error bits. The emergence of error bits within data may occur when data packets become compromised, for example, as may occur during powering-up or a powering down of a system on which the data is stored. Accordingly, various codes and algorithms have been implemented in network systems and storage devices as a tool for managing the detection and correction of error bits and/or erroneous data packets, so as to recover data which has been lost, degraded or otherwise compromised during or after its storage. Such codes are typically adapted, for example, to generate and embed data redundancies within the original data packets, by encoding the data packets in a prescribed manner. When the stored data is retrieved, decoding such redundancies may enable recovery of lost data or at least portions thereof. Unfortunately, such decoding operations of error detecting and/or error correcting codes are computationally demanding, typically rendering their implementation cumbersome in network systems, storage devices and the like.

U.S. Patent Application Publication No.20080115043 to Shimizume et al. purports to disclose a NAND type flash memory device having a cell array formed by a plurality of memory cells storing data therein arranged in a matrix, wherein data is stored in the cell array in units of pages, the page data is divided into a plurality of sectors, and a check code is added for every sector. Page write operations are performed in units of word line sectors. The publication describes an embodiment where for data write operation, pages of data to be written are divided into four code words and input into an error correction circuit. Write-verify operations are then performed on the pages. Data read operation is done for page data comprising four main code words and associated parity data. The main code words and parity data are inputted to the error correction circuit. In summary, the publication can be seen to convey that the block size of the error correction is implied by the page size, i.e. by a predefined parameter of the flash memory hardware structure.

U.S. Patent Application Publication No.20060282717 to Suda purports to disclose a nonvolatile memory organized in blocks comprising pages, each page comprising a data section and a redundancy section. For all pages, the redundancy section contains error correcting code information derived from the content of the associated data section, as well as management data. For selected pages, where fast readout of parts of the management data is needed, the redundancy section also contains a cyclic redundancy check information which is derived either from the management data as a whole, or from only the quickly needed part of the management data. In summary, the publication can be seen to convey that the block size of the error correction is implied by the nonvolatile memory hardware organization.

International Patent Application Publication No. W02000/70459 to Walters purports to disclose an error correction circuit in a memory device and a method for a memory device using an error correcting block code, such as a Hamming code, to detect and correct erroneous data bytes. The error correction circuit and method are capable of improving the speed of error correction to reduce delays in an external data access time. In summary, the publication can be seen to convey that in the disclosed embodiments, the block size of the error correction is fixed.

A method and system for more flexibly managing error detection and error correction in memory devices is desirable.

A method for storing data in a non-volatile random access memory device connected to a cache memory of a digital system organized in cache lines having a cache line size, is set forth in claim 1. Accordingly, the method includes subdividing data to be stored in the random access memory device into data blocks of a selected data block size. Further, the method includes to derive, from the data block, associated error protection data. The disclosed method is also adapted for storing the data block together with the associated error protection data in the random access memory device, and **characterized in that** the data block size is dynamically selected to be equal to the cache line size of the cache memory to which the random access memory device is connected. The deriving and storing is typically done for several or all data blocks.

For digital systems having a cache memory, the cache can be seen as a pool of entries. Each entry consists of a datum and a tag. The datum (a piece of data) is a copy of the same datum in some background memory, and the tag specifies the identity of the datum in the background memory of which the datum contains the copy. "Cache line", also often denoted as "cache block", denotes the smallest individually accessible unit of data within the cache memory. In many known applications, the cache line typically comprises 8 to 128 bytes of data, which is also denoted as a cache line size being between 8 and 128 bytes. The cache line size is a design parameter of digital systems having a cache memory. Data transfers to and from the cache memory may be performed in parallel to/from all bytes of the cache line. Correspondingly, data transfers from and to the background memory will also be performed in a grouped way, accessing units of as many bytes as indicated by the cache line size.

In embodiments of the present invention, the non-volatile random access memory device constitutes an embodiment of the background memory, and is being accessed by a digital system through a cache. Independent of that, in the embodiments the above step of determining error protection data includes determining error detection data and/or error correction data. Yet independent of that, the step of deriving error protection data may be performed either within the digital system to which the random access memory device is connected, or by a dedicated error protection data deriving unit within the random access memory device.

According to other embodiments of the present invention there is also provided a method for reading data from a non-volatile random access memory device connected to a cache memory of a digital system organized in cache lines having a cache line size. The method includes reading, from the random access memory device, a data block of a selected data block size together with associated error protection data. The method includes evaluating the error protection data, and forwarding the data block to the cache memory, and is **characterized in that** the data block size is selected to be equal to the cache line size of the cache memory to which the non-volatile random access memory device is connected. The reading, evaluating, and forwarding is typically done consecutively for several data blocks residing at consecutive or non-consecutive addresses within the random access memory device.

Further embodiments of the present invention may include scanning the random access memory device for errors directly after power-up using the error protection data. The scanning may also be done repeatedly and cyclically using the error protection data. Still, in other embodiments, the scanning of the random access memory device for errors directly after power-up may comprise correcting the random access memory device contents using error correction data comprised in the error protection data.

In other embodiments of the present invention, there is provided a system for storing and reading data, including a non-volatile random access memory device connected to a cache memory of a digital system, and further including an error protection processing unit. The disclosed system may be equipped and configured for subdividing data to be stored in or data being read from the random access memory device into data blocks of a selectable data block size. Further, the error protection processing unit is equipped and configured to determine, upon storing data, from the data blocks associated error protection data, and to evaluate the associated error protection data upon reading. The system is further equipped and configured to store the data blocks together with the associated error protection data in the random access memory device, and is **characterized in that** the data block size is selected to be equal to the cache line size of the cache memory to which the non-volatile random access memory device is connected.

A preferred embodiment of the present invention is described with reference to the accompanying drawings. The preferred embodiment merely exemplifies the invention. Plural possible modifications are apparent to the skilled person. The gist and scope of the present invention is defined in the appended claims of the present application.

List of Figures:
**Fig. 1** is a block diagram of a system for storing and/or accessing data, in accordance with an embodiment of the present invention.
**Fig. 2** is a diagram illustrating a data structure, in accordance with an embodiment of the present invention.
**Fig. 3** is a diagram illustrating another data structure, in accordance with an embodiment of the present invention.
**Fig. 4** is a block diagram of a process flow for storing data, in accordance with an embodiment of the present invention.
**Fig. 5** is a block diagram of another process flow for reading data, in accordance with an embodiment of the present invention.

Detailed Description:
Disclosed embodiments of the present technique relate to an error management system employing error protection data adapted for protecting data stored on non-volatile memory systems using, for example, non-volatile random access memory, abbreviated herein as NVRAM, technologies. Such technologies for storing data may include flash memory hard disks as well as other types of solid state memory devices. Generally, embodiments of the present invention are aimed at storing data on memory devices, such that when the stored data is retrieved at a later time, errors that may have been introduced or those that may have otherwise corrupted the data during and/or after its storage are readily detected and corrected during a read access operation of the memory device.
Specifically, the disclosed systems and methods are adapted for dividing the data to be stored on the memory device into separate blocks of data, where each block of data is made up of a subset of the entire data. As part of the error management system, the process of dividing the data into multiple data blocks is performed in such a way that each data block is sized in accordance with a size of a cache line of a cache memory to which the non-volatile memory device is connected. In so doing, it is possible to perform memory scanning for detecting and correcting errors existing within the stored data in an expeditious and efficient manner as read access operations from the non-volatile memory device to the cache memory are carried out.

The disclosed error protection system may further include assigning to each of the data blocks a checkword, such as one formed by a Cyclic Redundancy Check also known as CRC. The checkword associated with each of the data blocks is adapted to further increase the reliability and efficiency of error detection during read access operations when the stored data is retrieved. In addition, the error management system includes assigning to each of the data blocks an error correction code, such as a systematic error correction code, adapted for correcting corrupted and/or otherwise lost data within each of the data blocks. Accordingly, the detection and/or correction of error within the stored data blocks may be done continuously and/or during powering up of the memory system. Hence, the technical effect of the present invention is to provide a robust error management system configured to detect and correct corrupted data existing within non-volatile solid state memory devices.

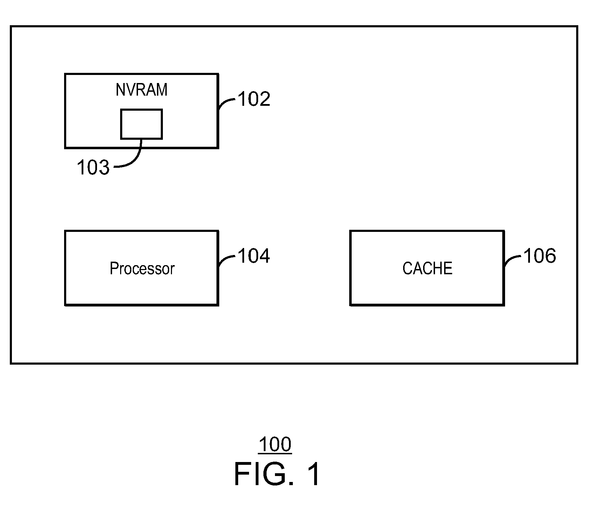

Turning to the figures, **Fig. 1** illustrates a block diagram of a system 100 adapted for storing and/or reading data, in accordance with an embodiment of the present technique. The system 100 may be, for example, a personal computer, abbreviated PC herein, a server, a network device, and/or other devices employing processing and memory systems. The system 100 includes a memory device 102, such as NVRAM formed by solid state and other memory devices, including flash memory cards, or a combination thereof. As further described below, the memory device 102 includes an error protection processing unit 103 for effecting an error management system used for storing in, as well as reading data from the memory device 102. It should be borne in mind that the memory device 102 may be formed of other memory and/or processing devices not illustrated herein.

The system 100 further includes a processor 104, and a cache memory unit 106. As illustrated by Fig. 1, the memory device 102 forms an internal part of the system 100, where the memory device 102 may directly couple to the processor 104 and/or to the cache memory unit 106. The cache memory unit 106 may be an ordinary cache or a CPU cache, subdivided into cache lines, otherwise known as a datum. As will be described further below, the system 100 can implement an error protection management mechanism via the error protection processing unit 103, whereby each block stored on the memory device 102 is made equal in size to the cache line size of the cache memory unit 106. It should be noted that the cache line size is not a property of the memory device 102, but a property of the cache memory unit 106, and thus can also be seen to be a property of the system 100 to which the memory device 102 is coupled.

Those skilled in the art will appreciate that the memory device 102 and components, for example the error protection processing unit 103 included therein, may be partitioned into various memory portions, each of which may be configured to store particular types of data. In addition, the cache memory unit 106 may be adapted for operating as a temporary storage area where frequently accessed data can be stored for rapid retrieval and access. For example, once the data is stored in the cache memory of the system 100, such data can be retrieved and used in the future by accessing the cached copy rather than having the system 100 perform a re-fetching or re-computing of the desired original data. As will be described further below, the memory device 102 is adapted to store data, particularly, data that is generally divided into multiple data blocks, where each data block is sized in accordance with a size of a cache line within the cache memory unit 106. During read access operations when the aforementioned data blocks are retrieved from the memory device 102, the sizing of the data blocks in accordance with the size of cache lines enables the system 100 to efficiently perform memory scans adapted for detecting and correcting errors existing within the data stored on the memory device 102.

To further facilitate read access operations, the error protection processing unit 103 is adapted to store with each data block a checkword, as well as error protection data for detecting and correcting errors, respectively, that may exist within the stored data blocks. The error protection processing unit 103 may be further adapted to be reprogrammable for performing error correction calculations, such as deriving error protection data upon storing, and evaluating error protection data upon reading, for data blocks of programmable or selected size. These and other error correcting/detecting features, as further described below, form part of an error management system implemented by the system 100 in general and the memory device 102 and the error protection processing unit 103 in particular. Such an error management system can be implemented via software and/or hardware components, both of which may be supported by the processor 104 and the cache memory unit 106. The processor 104 may form a regular processor, such as those found in PCs, serves and the like. Alternatively, the processor 104 may be custom-designed to carry out and execute special Error Correction related instructions as, for example, may be performed by field programmable gate arrays, abbreviated as FPGAs herein.

Further, read access data operations, particular, those aimed at error detection and/or correction may be performed by external software or hardware or, preferably, by on chip hardware. Such an implementation may require less computing power so as not to degrade operating performance of the system 100. Hence, the read access operation may include deployment of the error management mechanism, including scanning the memory device 102 for error detection, as well as correcting such detected errors. In one embodiment, such scanning of the memory device 102 may be performed continuously, while in other embodiments the scanning may be performed intermittently at prescribed time frames. Yet in other embodiments, the scanning may be initiated before beginning of program execution, such as the data stored on the memory device 102. This may provide the advantage of re-establishing program integrity before the program is actually launched thereby effectuating a robust protection platform operating against malware and other types of malicious programs such as computer viruses. Still, in other embodiments, the scanning of the memory device 102 may be performed after a powering up of the system 100 and/or the memory device 102. In so doing, errors that may have occurred prior to powering down of the system 100 can be immediately detected, diagnosed and/or corrected upon restart and prior to a full deployment of programs and other platforms executed by the system 100. Hence, these and the below described features of the error management system, as implemented by the system 100, ensures data stored on mass storage devices, and/or data destined for transmission over a network is properly scanned and corrected for errors before the data is stored and/or transmitted, respectively.

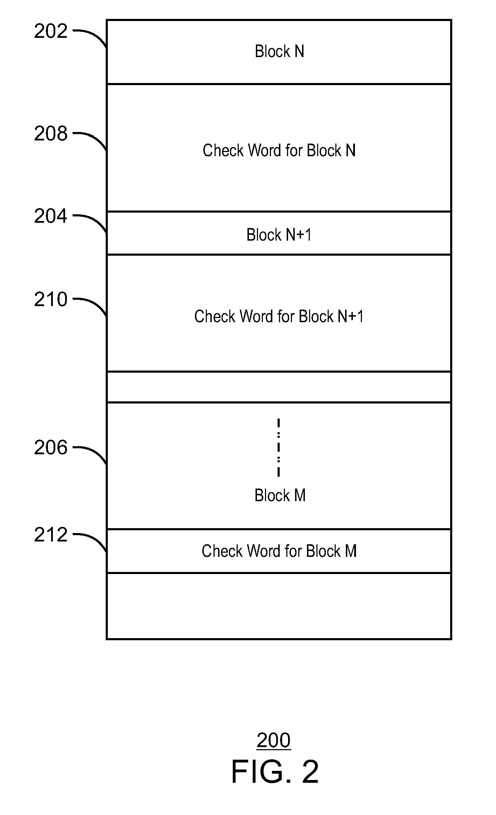

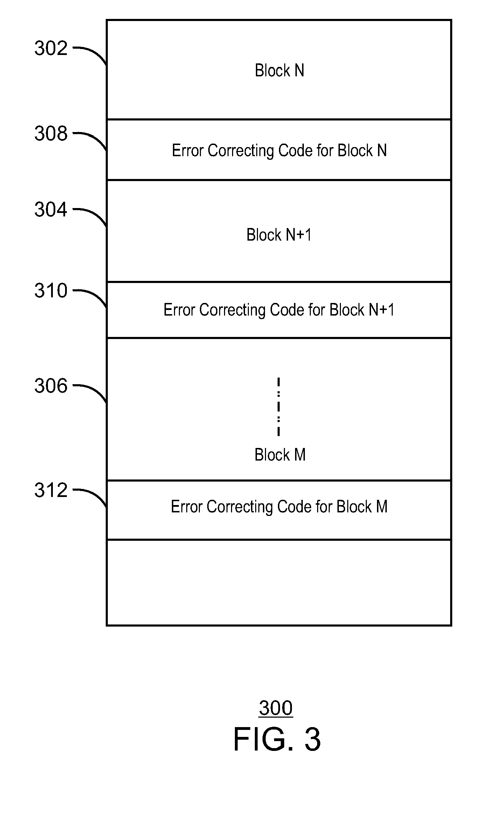

**Fig. 2** and **Fig. 3** both are diagrams illustrating data structures 200, 300 in accordance with embodiments of the present invention. Both data structures 200, 300 can be seen to represent a portion of a data segment, file, or the like adapted to be stored in a non volatile memory device, such as the memory device 102 discussed above with reference to Fig. 1. Both data structures 200, 300 comprise multiple data blocks as well as multiple pieces of error protection data. The number of bits and, hence, the size attainable by each of the data blocks corresponds to the size of a cache line of a memory system, for example, the memory device 102, in which the data blocks are stored . The sizing of the data blocks in accordance with the sizes of the cache lines of the memory system enables scanning the data blocks in each cache line for errors during read access. In so doing, the data can be stored within the memory and subsequently retrieved in a manner that increases the efficiency and reliability of the read access operations.

In the data structures 200, 300, each piece of error protection data is associated and attached, respectively, with the respectively preceding data block. Other, predetermined relative arrangements of a data block and its associated piece of error protection data are conceivable and fall within the gist of the present invention.. During read access operations, the pieces of error protection data facilitate the scanning of the data blocks for corrupted data blocks containing error bits.

More specifically, as shown in **Fig. 2****,** the error protection data may be embodied as checkwords such as implemented by a CRC. In general, CRCs are mathematical functions whose numerical values are adapted for detecting changes to raw data. Thus, the CRCs may be used in digital networks and memory devices, such as hard disk drives or memory devices. Accordingly, Fig. 2 shows a data structure 200 comprising data blocks 202, 204, 206 and pertaining check words 208, 210, 212. Thus, during a read access operation, when the data blocks 202-206 are read or received, the CRCs of each respective data block are matched against earlier calculated CRCs for determining whether the data block is corrupted and/or whether corrective action must be initiated by a processor.

**Fig. 3** is a diagram illustrating another data structure 300, in accordance with an embodiment of the present invention. As illustrated, the data structure 300 is made up of multiple data blocks, such as data blocks 302, 304 and 306.
The data structure 300 includes error correction codes 308, 310 and 312. The error correction codes 308-312 are associated, respectively, with the data blocks 302-306. For example, the error correction code for Block N 308 is derived from, associated with, and attached to the data block N 302, the error correction code for Block N+1 310 is derived from, associated with, and attached to the data block N+1 304, the error correction code for Block M 312 is derived from, associated to, and attached to the data block M 306, and so forth. During read access operations, the error correction codes 308-312 facilitate the correction of the data contained in the pertaining data blocks 302, 304, 306.

More specifically, the error correction codes 308-312 may be embodied as the redundancy bits of a systematic error correction code, such as Reed Solomon, abbreviated herein as RS, code. Generally, RS and other similar error correcting codes operate by augmenting original data, i.e., data blocks 302-308, with additional data, typically known as redundant symbols or parity bits. For example, in RS codes, for every k input symbols having a certain number of bits encoded, the RS code adds a certain amount of bits p, called redundant bits, to yield a total number, n=p+k, of bits for every k input bits encoded during a recoding/writing process. During readout of the memory device, the error correction codes 308-312 may be used in RS decoding for data error correction utilizing the redundant bits to recover those input symbols or k symbols that may have been lost due to errors. Such errors may occur while the data is stored, read, or when the data is transmitted over a medium. The parity bits may be used to recover certain recognizable data patterns from which portions of the data blocks 202-206 can be reconstructed during the aforementioned error correction.

By associating an error correction block with each data block, i.e., blocks 202, 204, respectively, the error management mechanism may re-establish data integrity, particularly, for program data where error correction may be performed before the program is fully deployed. Further, by using systematic error correction code, it may not be necessary to recalculate original data words, so that those words or portions thereof may be read without a decoding process. In addition, under the aforementioned implementation of the error management mechanism, contents of the memory device, i.e., memory device 102 of Fig. 1, may be scanned and corrected continuously, or otherwise whenever is necessary. In so doing, soft errors may be corrected before corrupted data is actually read. Accordingly, such continuous operations performed by the error management mechanism may be implemented via external or internal software and/or hardware, or preferably by on-chip hardware.

In addition, because NVRAM devices such as the memory device 102 described with reference to Fig. 1 generally retain data even after the devices is powered down, the error management mechanism is adapted to automatically execute error detection and correction as the memory device is subsequently powered up. In so doing, errors introduced between the powering down and powering up of the device are corrected, thereby, guaranteeing error free data after the device is powered up. Those skilled in the art will appreciate that such features of the error management mechanism, as described above, may, too, be implemented via on chip hardware or other peripheral processing devices.

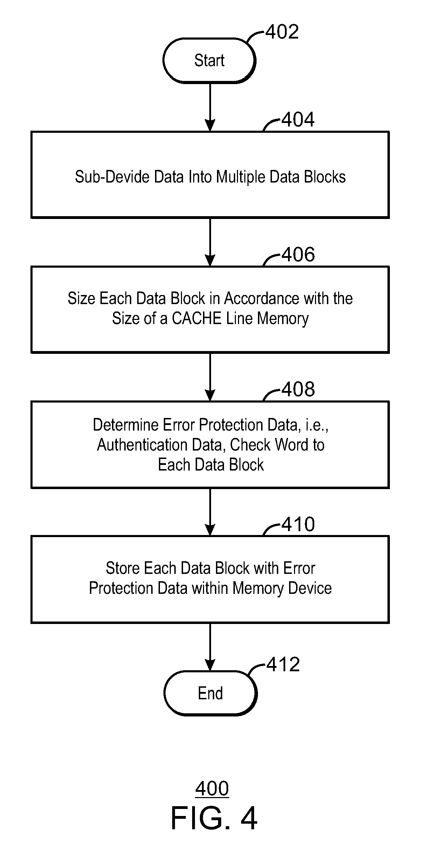

**Fig. 4** is a block diagram 400 of a process flow in accordance with an embodiment of the present invention. The process flow described by the block diagram 400 is that of a an error management mechanism adapted for storing, as well as detecting and correcting errors within data stored on a non-volatile memory device. Particularly, the process flow describes the manner by which data can be stored on the memory device so that during retrieval or read access of the data, errors that may have been introduced to the data after storage or transmission can be properly detected and corrected.

Thus, the process flow shown in block diagram 400 begins at block 402, from which it advances to block 404. At that point, the process flow divides the data adapted for storage on a non-volatile memory device into multiple data blocks, such as illustrated in the data blocks 202-206 and 302-306 described in Figs. 2 and 3, respectively. Thereafter, the block diagram 400 proceeds to block 406, where each data block divided at block 404 is sized in accordance with a size of a cache line of the cache 106. Such sizing of the data blocks enables detecting errors within each of the data blocks, as well as correcting those data blocks during each write and read access operation. Thereafter, the process flow 400 proceeds to block 408, where for each of the data blocks containing real data, the error management mechanism determines error protection data and correction data for each data block, such as illustrated by Check Words 208-212 or Error Correcting Codes 308-312 of Figs. 2 and 3, respectively.

From block 408, the process flow 400 advances to block 410, whereby the data blocks obtained at block 404, as well as, the associated error protection data obtained at block 408 are stored within the memory device, such as the memory device 102 discussed with reference to Fig. 1. Finally, the block diagram 400 advances to block 412 where the process flow ends. The process flow 400 may be applied to the random access memory device, on which the data blocks are stored, such that the scanning for errors is performed repeatedly and cyclically using the error correction data, as well as correcting the random access memory device contents. In one exemplary embodiment, the step of scanning may be performed with a lesser priority than the step of determining.

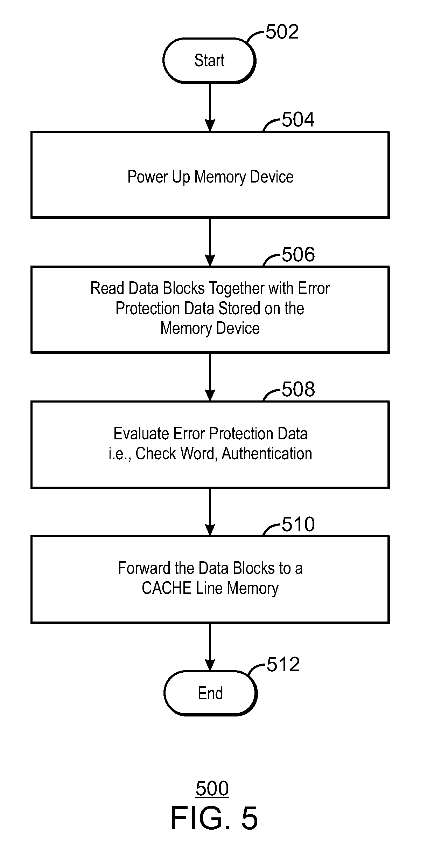

Fig. 5 is a block diagram 500 of a process flow in accordance with an embodiment of the present invention. The process flow described by the block diagram 500 is that of a an error management mechanism adapted for reading, as well as detecting errors within data stored on a non-volatile memory device. Particularly, the process flow describes the manner by which data stored on the memory device 102 is retrieved and scanned during read access operations. In so doing the process flow 500 may also be adapted, in subsequent operations, to detect and correct those errors that may have been introduced or have occurred during the storage and/or the transmission of the data.

Accordingly, the process flow 500 begins at block 502, from which the process flow proceeds to block 504. At block 504, the memory device on which data is stored is powered up so that the device may become fully functional. The memory device may be a non-volatile memory device, particularly, the NVRAM memory device 102 described with reference to Fig. 1. From block 504, the process flow 500 advances to block 506, where the process flow reads and scans the data stored on the memory device. Accordingly, the scanning of the memory device is effected via the error management mechanisms described above with reference to Figs 1-3. Thus, the memory device may scan the data continuously, when prompted, or when necessary for detecting and correcting errors found within the data stored on the memory device. Furthermore, the reading of the data blocks is performed together with error protection data stored on the memory device. During this reading, the block size of the data blocks is **characterized in that** it is selected to be equal to the size of the cache lines of a cache memory 106 to which the memory device 102 is connected.

From block 506, the process flow 500 proceeds to block 508, where the process flow evaluates the error protection data stored with each data block. In so doing, error detection is performed of the data retrieved from the memory device. Hence, the error management mechanism utilizes error protection data, such as checkwords for detecting existing errors contained within the blocks forming the entire or portions of the data stored on the memory device. From block 508, the process flow proceeds to block 510, wherein the data blocks are forwarded to a cache line memory where those blocks can be stored temporarily and retrieved expeditiously upon demand. Furthermore, it should be borne in mind that the above described retrieval and reading process of the data blocks is further facilitated by the fact that each data block is sized in accordance with a size of a cache line of the cache 106 to which the data is forwarded.

One of ordinary skill will appreciate that combining any of the above-recited features of the present invention together may be desirable.

## Claims

1. A method (400) for storing data in a non-volatile random access memory device (102) connected to a cache memory (106) of a digital system (100), the cache memory (106) being organized in cache lines, the method comprising:
- subdividing (404) data to be stored in the random access memory device (102) into data blocks of a selected data block size;
- determining (408), from the data blocks, associated error protection data (208, 308),
- storing (410) the data blocks together with the associated error
protection data (208, 308) in the random access memory device (102), and **characterized** (406) **in that** the data block size is selected to be equal to the size of the cache lines.

2. A method (400) for storing according to claim 1, where the step of determining error protection data comprises determining error detection data (208, 210, 212).

3. A method (400) for storing according to claim 1, where the step of determining error protection data comprises determining error correction data (308, 310, 312).

4. A method (500) for reading data from a non-volatile random access memory device (102) connected to a cache memory (106) of a digital system (100), the cache memory (106) being organized in cache lines, the method comprising:
- reading (504) data blocks of a selected data block size, together with associated error protection data (208, 308), from the random access memory device (102);
- evaluating (508) the error protection data (208, 308);
- forwarding (510) the data blocks to the cache memory (106);
and **characterized in that** the data block size is selected to be equal to the size of the cache lines.

5. A method (500) for reading according to claim 4, comprising scanning the random access memory device (102) for errors directly after power-up using the error protection data (208, 308).

6. A method (500) for reading according to claim 4, comprising scanning the random access memory device (102) for errors repeatedly and cyclically using the error protection data (208, 308).

7. A method (500) for reading according to claim 4, where the error protection data comprises error correction data (308, 310, 312), the method comprising scanning the random access memory device (102) for errors directly after power-up using the error correction data (308, 310, 312) and correcting the random access memory device contents.

8. A method (500) for reading according to claim 3, where the error protection data comprises error correction data (308, 310, 312), the method comprising scanning the random access memory device for errors repeatedly and cyclically using the error correction data and correcting the random access memory device contents.

9. A method (500) according to any one of claim 5 to claim 8, wherein the step of scanning is performed with a lesser priority than the step of evaluating.

10. A system (100) for storing and reading data, comprising a non-volatile random access memory device (102) comprising an error protection processing unit (103), and a cache memory unit (106) organized in cache lines for caching the data for a processor (104); the system being equipped and configured for subdividing data to be stored in the random access memory device into data blocks (202, 302); the error protection processing unit (103) being equipped and configured to determine, upon storing and from the data blocks, associated error protection data (208, 308), and to evaluate, upon reading, the error protection data; the system being equipped and configured to store the data blocks together with the associated error protection data in the random access memory device;
and **characterized in that**
the error protection processing unit is equipped and configured to
determine the error protection data from data blocks of a selected size, and **in that** the system is equipped and configured to select the data block size to be equal to the size of the cache lines.

11. A system (100) according to claim 10, wherein the error protection processing unit is equipped and configured to scan, directly after power-up, the memory device for errors using the error protection data.

12. A system (100) according to claim 10, wherein the error protection processing unit is equipped and configured to repeatedly and cyclically scan the memory device for errors using the error protection data.

13. A system (100) according to claim 11 or claim 12, wherein the error protection processing unit is equipped and configured to perform the scanning with a lesser priority than the determining upon storing or the evaluating upon reading.
